# EUROPÄISCHE PATENTSCHRIFT

(11) **EP 3 034 334 B1**
(45) Veröffentlichungstag und Bekanntmachung des Hinweises auf die Patenterteilung: **02.10.2019**
(21) Anmeldenummer: 15199795.4
(22) Anmeldetag: 14.12.2015
(51) Int. Cl.: B60D 1/48, B60D 1/173, B60D 1/18

(54) **FÖRDERMITTELZUG MIT KOPPLUNGSKINEMATIK**
CONVEYOR TRAIN WITH COUPLING KINEMATICS
TRACTION DE MOYEN DE TRANSPORT DOTEE D'UNE TRINGLERIE D'ACCOUPLEMENT

(30) Priorität: 18.12.2014 DE 102014018671
(43) Veröffentlichungstag der Anmeldung: 22.06.2016
(73) Patentinhaber: A&A Logistik-Equipment GmbH & Co. KG, 21258 Heidenau (DE)
(72) Erfinder: Haltermann, Frank, 21258 Heidenau (DE); Habedank, Gerhard, 21220 Seevetal (DE)
(74) Vertreter: Holz, Christian

(56) Entgegenhaltungen:
- DE-C- 370 263
- GB-A- 2 189 290
- US-A- 1 234 068

## Beschreibung

Die Erfindung betrifft einen Fördermittelzug, insbesondere einen Routenzug, gemäß dem Oberbegriff des Anspruchs 1, ein Fördermittel für einen Fördermittelzug gemäß Anspruch 14 sowie eine Kopplungskinematik für einen Fördermittelzug oder für ein Fördermittel gemäß des Anspruchs 15. Das Dokument US 1 234 068 A offenbart einen Fördermittelzug gemäß dem Oberbegriff des Anspruchs 1.

Das Gebiet der Intralogistik betrifft die Waren- und Materialflüsse innerhalb von Unternehmen. In der Produktion müssen Komponenten und Zwischenprodukte den Fertigungsschritten zugeführt und danach zur Weiterverarbeitung oder Verpackung abgeholt werden. Im Versand sind Lagerwaren für die Versendung zu kommissionieren. Hierfür werden bei größeren Transportmengen und -wegen sogenannte Routenzüge, Trailerzüge oder Logistikzüge eingesetzt, die aus einem Zugfahrzeug und im Allgemeinen drei bis fünf Routenzugelementen oder Routenzuganhängern bestehen. Der Fahrer fährt mit seinem Zug die verschiedenen Stationen im Lager, in der Produktion, im Warenausgang etc. an, hält dort und ent- bzw. belädt die einzelnen Anhänger je nach Auftrag.

Die Routenzuganhänger sind untereinander sowie gegenüber dem Zugfahrzeug üblicherweise mit einer starren Deichsel-Kupplung-Kombination verbunden. Sowohl die Deichsel als auch die Kupplung sind dabei fest an dem jeweiligen Routenzuganhänger vorgesehen und die Relativdrehung zueinander findet über ein Verbindungselement wie z.B. einen Bolzen statt, welches die Deichsel und die Kupplung um eine Hochachse drehbar miteinander verbindet. Dieses Verbindungselement bildet einen Kopplungspunkt, der gleichzeitig auch den feststehenden Momentanpol auf der Mittellängsachse der Routenzuganhänger darstellt, um den bei einer Kurvenfahrt die Drehung der beiden Routenzuganhänger zueinander stattfindet. An diesem Kopplungspunkt können Deichsel und Kupplung bzw. Bolzen aneinander reiben, wodurch Verschleiß entstehen kann.

Die Routenzuganhänger können verschiedene Arten von Rädern und Rollachsen aufweisen. So kann jeweils eine Rollachse mit einem Räderpaar an der vorderen und hinteren Kante des Routenzuganhängers in Fahrtrichtung betrachtet vorgesehen sein. Dies ermöglicht eine gleichmäßige Abstützung des Gewichts des Routenzuganhängers und seiner Beladung über alle vier Räder, die üblicherweise nahe den Ecken des Routenzuganhängers vorgesehen sind. Ferner kann ein derartiger Routenzuganhänger nicht kippen, wenn er von anderen Fahrzeugen des Routenzuges getrennt wird.

Zu beachten ist hierbei, dass wenigstens eine der beiden Rollachsen lenkbar, d.h. um eine Hochachse drehbar sein muss, um den Routenzuganhänger überhaupt kurvenfahrfähig zu machen. Diese Lenkbarkeit der einen Rollachse erfordert jedoch gegenüber starren Rollachsen einen erhöhten Aufwand der mechanischen Konstruktion sowie der späteren Wartung durch z.B. Schmierung der beweglichen Teile. Auch müssen hier vier Räder vorgesehen und aufgrund ihres Verschleißes regelmäßig erneuert werden. Ferner sind sehr kleine Kurvenradien mit dieser Rollachsenanordnung nicht möglich, vgl. CH 569 605 A.

Um diese Kosten zu vermeiden und dennoch einen kurvenfahrfähigen Routenzuganhänger zu erhalten, der insbesondere kleinere Kurvenradien fahren kann, ist es bekannt, diesen lediglich mit einer in Fahrtrichtung etwa mittig angeordneten Rollachse, welche nicht lenkbar ist, mit sog. Bockrollen vorzusehen. Um gleichzeitig eine hohe Spurtreue zu erreichen, d.h. den Routenzuganhänger in der gleichen Spur wie das in Fahrtrichtung vorausfahrende Fahrzeug wie ein Zugfahrzeug oder einen weiteren Routenzuganhänger rollen zu lassen, wird die Rollachse genau mittig zwischen den beiden Kopplungspunkten, d.h. den Momentalpolen zu dem vorderen und hinteren Fahrzeug des Routenzuges vorgesehen. Nachteilig ist hierbei jedoch, dass bereits kleinste äußere Anregungen wie z.B. durch Unebenheiten des Untergrunds etc. zu einem Aufschaukeln der Routenzuganhänger um ihre jeweilige Hochachse während der Fahrt hierdurch führen können.

So betrifft beispielsweise die CH 569 605 A einen Gliederzug mit einem Zugwagen und mehreren Anhängern, die automatisch dieselbe Kurve durchfahren. Hierzu sind die Anhänger als Einachswagen ausgebildet, die nach vorne und nach hinten jeweils gleich weit über die Radachse hinausragende Wagenteile oder starre Deichseln aufweisen, die von Wagen zu Wagen mittels Scharniergelenken mit vertikaler Drehachse miteinander verkuppelt sind. Die Scharniergelenke bilden die Momentanpole, die jeweils von den Rollachsen der Anhänger gleich weit beabstandet sind. Dies ermöglicht einen spurtreuen Gliederzug, der vergleichsweise enge Kurvenradien umfahren kann.

Nachteilig ist hierbei jedoch, dass die einzelnen Anhänger des Routenzuges zueinander einen gewissen Abstand in Fahrtrichtung aufweisen müssen, in dem die starren Deichseln und Kupplungen angeordnet sind. Dieser Abstand erzeugt zwischen den einzelnen Anhängern einen nicht-nutzbaren Raum, der die Länge des Routenzuges vergrößert, ohne dass hierdurch ein Nutzen für den Transport von Gütern entsteht. Ferner besteht bei diesen großen Anhängerabständen eher die Gefahr als bei kürzeren, dass Gegenstände oder Personen beim Halt oder bei der Fahrt zwischen die Anhänger gelangen können.

Zur Überwindung dieses Nachteils schlägt die EP 1 342 594 A2 ein Gelenk zwischen zwei gelenkig miteinander verbundenen Fahrzeugen oder Fahrzeugteilen eines Gelenkfahrzeuges vor, welches zwei kreuzweise und drehbar an den Fahrzeugen oder Fahrzeugteilen angelenkte Gelenkarme aufweist. Eine derartige kinematische Kopplung über zwei sich kreuzende Lenker wird als Scherengelenk bezeichnet. Die FR 526 803 A sowie die DE 10 2011106 842 A1 beschreiben jeweils vergleichbare Konstruktionen und Anwendungen, bei denen die beiden Gelenkarme jeweils in gleichem Abstand zur Mittellängsachse der Fahrzeuge an den Fahrzeugen oder Fahrzeugteilen beabstandet angeordnet und darüber hinaus gleichlang ausgebildet sind. Eine derartige Scherengelenkkonstruktion erlaubt nicht nur einen geringeren Abstand zwischen den benachbarten Fahrzeugen als zuvor beschrieben, sondern der Schnittpunkt der beiden Gelenkarme, d.h. der Momentalpol, wandert bei einer Kurvenfahrt von der Mittellängsachse zum Inneren der Kurve, wodurch sich der Radius der Kurvenfahrt verringern lässt.

Nachteilig ist hierbei jedoch, dass die zuvor beschriebenen Routenzuganhänger bzw. hieraus gebildeten Routenzüge zwischen benachbarten Routenzuganhängern wenigstens bei Geradeausfahrt bzw. entsprechender Ausrichtung der Routenzuganhänger jeweils einen Abstand aufweisen, der die Länge des Routenzuges ohne Nutzen vergrößert und gleichzeitig einen Gefahrenbereich darstellen kann.

Nachteilig ist ferner, dass die zwischen den Routenzuganhängern wirkenden Kräfte beim Anfahren sowie beim Bremsen untereinander über die Streben der Scherenkinematik übertragen werden müssen. Hierdurch kann es bei starken negativen oder positiven Beschleunigungen zum Verbiegen der Scheren kommen. Auch können die Gelenke der Scheren hierdurch sehr stark belastet werden.

Eine Aufgabe der vorliegenden Erfindung ist es daher, einen Fördermittelzug, insbesondere einen Routenzug, der eingangs beschriebenen Art bereit zu stellen, so dass der Abstand zwischen benachbarten Anhängern weiter verringert werden kann. Insbesondere soll dies möglichst einfach erfolgen. Wenigstens soll eine Alternative zu bekannten Fördermittelzügen bereitgestellt werden.

Die Aufgabe wird erfindungsgemäß durch einen Fördermittelzug mit den Merkmalen des Anspruchs 1, ein Fördermittel mit den Merkmalen des Anspruchs 14 sowie eine Kopplungskinematik mit den Merkmalen des Anspruchs 15 gelöst. Vorteilhafte Weiterbildungen sind in den Unteransprüchen beschrieben.

Somit betrifft die Erfindung einen Fördermittelzug, insbesondere einen Routenzug, mit einem ersten Fördermittel und einem zweiten Fördermittel, welches beides Routenzuganhänger sein können, die vorzugsweise eine Rollachse mit einem Räderpaar als Bockrollen aufweisen können. Die beiden Fördermittel können mittels einer Kopplungskinematik um einen Kopplungspunkt drehbar miteinander verbunden werden, wobei der Kopplungspunkt zwischen den beiden Fördermitteln liegt und dem Momentalpol bei Kurvenfahrt entspricht.

Erfindungsgemäß ist die Kopplungskinematik als Kreuzbandgelenk ausgebildet. Unter einem Kreuzbandgelenk wird eine Verbindung zwischen zwei Körpern verstanden, bei der zwei Bänder kreuzweise über i. Allg. bogenförmige Kreissegmente verlaufen. Die Bänder können auch als Scharnierbänder oder Gelenkbänder bezeichnet werden. Anstelle von Bändern können auch Seile verwendet werden. Die Bänder sind paarweise angeordnet und verbinden die beiden Körper von deren diametral gegenüberliegenden Enden miteinander. Die Flächen der Segmente können aufeinander Abrollen bzw. sich aufeinander Abwälzen.

Eine derartige Gelenkanordnung ist z.B. aus der DE 36 39 668 A1 sowie der GB 2189 290 A als Verbindung zwischen zwei Paneelen einer tragbaren Darstellungsvorrichtung bekannt. Die DE 4114 315 A1 vereinfacht die Herstellung einer derartigen Gelenkanordnung als extrudiertes Kunststoffteil. Die WO 94/22342 A1 wendet ein Kreuzbandgelenk zur Verbindung zweier Halbschalen an, die einen Behälter zur Aufnahme von Gegenständen, insbesondere ein Brillenetui, bilden.

Der Erfindung liegt dabei die Erkenntnis zugrunde, dass eine Kopplungskinematik zwischen zwei Fördermitteln als Kreuzbandgelenk ein sehr kompaktes Gelenk darstellen kann, durch dessen Anwendung zur Verbindung von Fördermittelzügen diese insgesamt kürzer aufgebaut werden können. Dabei kann die Länge des Kreuzbandgelenkes in Längsrichtung der Fördermittel bzw. des Fördermittelzuges, d.h. der Abstand zwischen zwei Fördermitteln, durch die Form der aufeinander abrollenden Segmente in einem hohen Maße eingestellt werden. Diese können zur Minimierung der Länge z.B. sehr flach bogenförmig ausgebildet sein, sodass ein gegenseitiges Abrollen bei minimalem Abstand der Fördermittel ermöglicht werden kann. Auch kann über die Form der aufeinander abrollenden Segmente das Kurvenverhalten der Fördermittel beeinflusst werden.

Vorteilhaft ist weiterhin, dass ein Kreuzbandgelenk kaum bewegliche Elemente aufweist, die gegeneinander abreiben und hierdurch verschleißen können, weil sich die starren Elemente eines Kreuzbandgelenks aufeinander abrollen bzw. abwälzen. Derartige Elemente müssten sonst regelmäßig gewartet und insbesondere geschmiert werden. Ferner vereinfachen die minimierten beweglichen Teile auch die Herstellung und Montage des Kreuzbandgelenkes.

Vorteilhaft ist weiterhin, dass ein Kreuzbandgelenk einen einfachen Aufbau besitzt. So können die Herstellung- und Montagekosten sowie der Wartungsaufwand verringert werden. Gleichzeitig ist ein Kreuzbandgelenk sehr robust, weil es kaum bewegliche und filigrane Elemente wie z.B. eine Scherenkinematik aufweist. Damit kann es auch großen Belastungen z.B. durch starke Bremsvorgänge der Fördermittel widerstehen.

Vorteilhaft ist weiterhin, dass Kreuzbandgelenke eines Drehbewegung der Fördermittel um über 90° zueinander ermöglichen können. Dies ist bei Kopplungskinematiken wie z.B. Deichsel-Kupplung-Kombinationen gar nicht möglich, weil sich deren Elemente bzw. die Fördermittel dann gegenseitig blockieren bzw. einander im Wege sein können, so dass die Drehbewegung bei ca. 90° endet. Durch diesen größeren Drehwinkel eines Kreuzbandgelenks werden Bewegungen des Fördermittelzuges ermöglicht, welche durch andere Kopplungskinematiken gar nicht gegeben sind. Ferner können die Fördermittel auch in dieser Winkelstellung noch kontrolliert bewegt werden.

Vorteilhaft ist weiterhin, dass mittels erfindungsgemäß gekoppelter Fördermittel ein Wendezug, d.h. ein sowohl vorwärts als auch rückwärts zu bewegender Fördermittelzug, sehr einfach realisiert werden kann, weil ein Kreuzbandgelenk symmetrisch aufgebaut ist und nicht zwischen einer Vorwärts- und Rückwärtsrichtung unterscheidet.

Vorteilhaft ist weiterhin, dass ein Kreuzbandgelenk eine Dämpfung von Bewegungen zwischen den Fördermitteln bewirken kann. Somit können Störungen durch die Kopplungskinematik gedämpft werden, welche sonst zu Schwingungen der Fördermittel um ihre Hochachse (Gierachse) führen könnten. Dies kann sich stabilisierend auf das Fahrverhalten des Fördermittelzuges auswirken. Vorzugsweise können die Bänder möglichst unelastisch ausgebildet sein, um eine Dehnung bzw. Streckung der Bänder in deren Länge zu vermeiden bzw. zu minimieren. Hierdurch kann das Kreuzbandgelenk möglichst spielfrei ausgebildet werden.

Gemäß einem Aspekt der vorliegenden Erfindung weist das Kreuzbandgelenk ein erstes Kopplungssegment, welches am ersten Fördermittel angeordnet ist, ein zweites Kopplungssegment, welches am zweiten Fördermittel dem ersten Kopplungssegment zugewandt angeordnet ist, ein erstes Band oder Seil und ein zweites Band oder Seil auf, wobei die Bänder oder Seile jeweils am ersten und zweiten Fördermittel derart befestigt werden können und derart, sich gegenläufig kreuzend, über die Kopplungselemente verlaufen können, so dass die Kopplungselemente aufeinander abrollen oder abwälzen können.

Mittels dieser Elemente kann eine Kopplungskinematik als Kreuzbandgelenk realisiert werden. Die beiden Kopplungssegmente sind dabei derart ausgebildet, dass über ihre einander zugewandten Flächen die Bänder bzw. Seile sich gegenläufig kreuzend verlaufen können. Dabei kann über die Formgebung dieser Flächen, d.h. die Konturen der Kopplungssegmente, sowohl das Kurvenverhalten des Fördermittelzuges als auch der Abstand zwischen den Fördermitteln beeinflusst werden. Die Kopplungssegmente können ferner als Stoßstangen der Fördermittel wirken.

Vorzugsweise sind die Bänder bzw. Seile aus Stahl, wodurch hohe Kräfte übertragen werden können und eine Dehnung bzw. Streckung in Längsrichtung vermieden bzw. gering gehalten werden kann. Hierdurch kann auch ein Spiel zwischen den Fördermitteln vermieden bzw. minimiert werden.

Vorteilhaft ist hierbei auch, dass die Kopplungssegmente als Stoßstangen wirken können. Dies ist insbesondere bei starken Bremsvorgängen vorteilhaft, dessen Belastung sonst auf die Deichsel-Kupplungs-Anordnung oder Scherenkinematik wirken und diese beschädigen könnte.

Gemäß einem weiteren Aspekt der vorliegenden Erfindung bildet der Schnittpunkt der Bänder oder Seile den Kopplungspunkt der beiden Fördermittel. Der Schnittpunkt oder auch Kreuzungspunkt der Bänder oder Seile ist der Kopplungspunkt der beiden Fördermittel und entspricht bei einer Kurvenfahrt des Fördermittelzuges dem Momentanpol zwischen den beiden Fördermitteln, um den sich diese zueinander drehen. Hierdurch kann der Momentanpol bei einer Änderung des Drehwinkels der beiden Fördermittel zueinander zwischen den Kopplungssegmenten wandern. Dies gilt auch für Drehungen über 90° hinaus.

Gemäß einem weiteren Aspekt der vorliegenden Erfindung können die Bänder oder Seile jeweils an den Kopplungselementen und bzw. oder an den Fördermitteln durch Befestigungen aufgenommen werden. Hierzu können die Bänder bzw. Seile um die Kopplungssegmente herumgeführt werden, damit die Befestigungen die Drehbewegung, insbesondere über 90°, nicht behindern können. Als Befestigungen können z.B. formschlüssige Elemente vorgesehen werden, wie z.B. Haken, Ösen oder Verdickungen an den Enden der Bänder bzw. Seile, die in korrespondierende Ösen, Haken oder Aussparungen an den Kopplungselementen bzw. an den Fördermitteln eingeführt werden können.

Die Befestigungen können fest angeordnet oder beweglich sein, z.B. um die Bänder oder Seile nach dem formschlüssigen Verbinden spannen zu können. Auch können die Bänder oder Seile durch die fest angeordneten Befestigungen gehalten und durch die Kopplungssegmente gespannt werden. Beispielsweise können die in Querrichtung, d.h. senkrecht zur Längsrichtung, von den Bändern bzw. Seilen umschlossenen einander diametral gegenüberliegenden Kanten eines Kopplungssegments zueinander beweglich ausgebildet sein, so dass durch den Abstand der Kanten des Kopplungssegments zueinander die durch die Befestigungen festgehaltenen Bänder oder Seile gespannt werden können.

Vorzugsweise sind die Befestigungen lösbar ausgebildet, so dass die Kopplung zwischen zwei Fördermitteln auch aufgehoben werden kann. Hierunter wird eine zerstörungsfreie Trennbarkeit der Fördermittel verstanden, wie z.B. das Einhaken bzw. Aushaken einer Ösen oder Schlaufe von einem Haken. Zu diesem Zweck können die Bänder oder Seile an beiden Enden jeweils lösbar sein, um sie lösen und entfernen zu können. Hierdurch könnten beschädigte oder verschlissene Bänder oder Seile einfach und schnell ausgetauscht werden. Auch könnten je nach Anwendung unterschiedliche Bänder oder Seile verwendet werden können, die z.B. unterschiedliche Belastbarkeiten aufweisen können.

Alternativ könnte auch nur ein Ende der Bänder oder Seile lösbar sein und das andere Ende wäre dann fest mit dem Fördermittel über die Befestigung verbunden, wobei eine feste Verbindung im Unterschied zu einer lösbaren Verbindung eine Art der Befestigung sein soll, die nur durch Zerstörung oder durch die Anwendung von Werkzeug aufgehoben werden kann. Hierdurch könnten die Fördermittel getrennt werden können, ohne dass jedoch die Gefahr besteht, dass die Bänder oder Seile verloren gehen könnten, weil sie an einem Ende befestigt bleiben. Vorzugsweise sind die beiden Bänder oder Seile am gleichen Fördermittel fest und am anderen Fördermittel lösbar angeordnet, um für den Benutzer Klarheit zu schaffen, wo er beim Trennen der Fördermittel tätig werden muss. Besonders bevorzugt sind die beiden Bänder oder Seile am in der bevorzugten Fahrtrichtung hinteren Fördermittel fest angeordnet, um zu vermeiden, dass die Bänder oder Seile lose am Ende des letzten Fördermittels eines Fördermittelzugs herunterhängen bzw. dort vom Benutzer verstaut oder befestigt werden müssen, was einen zusätzlichen Aufwand darstellen kann.

Gemäß einem weiteren Aspekt der vorliegenden Verbindung sind die Befestigungen ausgebildet, die Bänder oder Seile zu spannen. Hierzu können die Befestigungen beweglich ausgebildet sein, z.B. mittels eines Schraubmechanismus. Vorteilhaft ist hierbei, dass lose Bänder oder Seile einfacher montiert werden können und die für den Betrieb erforderliche Spannung dann durch eine Verschiebung der Befestigungen entgegengesetzt der Längsrichtung der Bänder bzw. Seile ausgeübt werden kann. Ferner können die Bänder bzw. Seile auch nachgespannt werden, falls im Betrieb eine Dehnung bzw. Streckung auftritt.

Vorteilhaft ist die Spannbarkeit der Bänder oder Seile in Kombination mit ihrer Lösbarkeit, weil die Spannung der Bänder oder Seile zur Trennung der Fördermittel über die Befestigungen aufgehoben werden kann, um die Trennung zu ermöglichen oder zumindest zu vereinfachen. Ebenso können hierdurch die Bänder oder Seile zweiter zusammengefügter Fördermittel gespannt werden, um Spiel zu vermeiden und gleichzeitig eine sichere Verbindung zwischen den Fördermitteln herzustellen.

Vorzugsweise sind die Bänder und Seile aus Stahl, wodurch hohe Kräfte übertragen werden können und eine Dehnung bzw. Streckung in Längsrichtung vermieden bzw. gering gehalten werden kann.

Gemäß einem weiteren Aspekt der vorliegenden Erfindung können die Bänder oder Seile in der Höhe versetzt zueinander verlaufend angeordnet werden. Mit anderen Worten verläuft ein Band bzw. Seil in der Höhe oberhalb des anderen Bands oder Seils. Hierdurch kann eine Berührung der Bänder bzw. Seile untereinander vermieden werden, wodurch sonst eine erhöhte Reibung entstehen könnte. Diese Reibung könnte eine Drehbewegung der Fördermittel zueinander erschweren sowie zu einem Verschleiß der Bänder bzw. Seile führen.

Gemäß einem weiteren Aspekt der vorliegenden Erfindung weisen die Kopplungselemente jeweils wenigstens einen Abstandshalter auf, welche sich in Richtung der Längsachse derart über die Bänder oder Seile hinauserstrecken können, so dass die Kopplungselemente über die Abstandshalter aufeinander abrollen können. Auf diese Weise können die Bänder bzw. Seile geschont werden, weil das Abrollen über sie vermieden werden kann. Werden die Abstandshalter derart ausgebildet, dass sich die beiden Kopplungselemente durchgehend, d.h. sowohl bei Geradeausfahrt als auch bei Kurvenbewegungen, berühren können, so kann ein Spiel zwischen den Fördermitteln vermieden bzw. minimiert werden. In diesem Fall können die Abstandshalter sozusagen als Stoßstangen oder "Bumper" der Fördermittel fungieren und Kräfte in Richtung der Längsachse aufnehmen. Dies kann insbesondere bei starken Bremsvorgängen sehr vorteilhaft sein, weil eine Belastung der Kopplungskinematik hierdurch minimiert werden kann, insbesondere im Vergleich zu Scherenkinematiken.

Gemäß einem weiteren Aspekt der vorliegenden Erfindung weisen die Kopplungselemente jeweils einen oberen Abstandshalter und einen unteren Abstandshalter, vorzugsweise ferner einen mittleren Abstandshalter, auf, welche in der Höhe zueinander versetzt angeordnet sind. Die Abstandshalter sind somit in der Höhe durch Aussparungen zueinander beabstandet. In den Aussparungen können die Bänder oder Seile zwischen dem oberen und unteren Abstandhalter verlaufen. Die Bänder oder Seile können vorzugsweise durch einen mittleren Abstandshalter voneinander getrennt verlaufen, um einen Kontakt zur Vermeidung von Reibung und Abnutzung zu vermeiden. Hierdurch kann die Stabilität des berührenden Kontaktes zwischen den Fördermitteln verbessert werden, da sich mehrere Abstandshalterpaare berühren können, die gemeinsam in der Höhe eine gewisse Kontaktfläche bzw. Kontaktlinie bilden können.

Gemäß einem weiteren Aspekt der vorliegenden Erfindung kann das erste Band oder Seil zwischen den oberen Abstandshaltern und den mittleren Abstandshaltern und das zweite Band oder Seil zwischen den mittleren Abstandhaltern und den unteren Abstandshaltern verlaufen. Auf diese Weise können die Bänder bzw. Seile sicher durch das mittlere Abstandhalterpaar in der Höhe voneinander beabstandet werden, so dass sie sich nicht berühren können. Die Bänder oder Seile können dabei jeweils in den Aussparungen zwischen den Abstandshaltern verlaufen.

Gemäß einem weiteren Aspekt der vorliegenden Erfindung sind wenigstens ein Kopplungselement, vorzugsweise beide Kopplungselemente, bzw. deren Abstandshalter wenigstens in Richtung der Längsachse federnd ausgebildet. Hierdurch kann über die Spannung der Bänder bzw. Seile sowie die Ausgestaltung der Kopplungskörper bzw. deren Abstandshalter in Richtung der Längsachse eine Vorspannung aufgebracht werden, um ein Spiel zwischen den Fördermitteln zu vermeiden bzw. zu minimieren. Auch kann auf diese Weise eine Entlastung der Kopplungskinematik hinsichtlich von Zugkräften zwischen den Fördermitteln erreicht werden, welche auch einen Schutz vor Überlastung der Kopplungskinematik durch insbesondere ruckartige Zugkräfte bewirken kann. Ferner können die Kopplungskörper als elastische Stoßstangen wirken.

Gemäß einem weiteren Aspekt der vorliegenden Erfindung weisen die Kopplungselemente bzw. deren Abstandshalter jeweils bogenförmige, elliptische oder halbkreisförmige Konturen auf, die aufeinander abrollen können. Hierdurch kann ein gleichmäßiges und ruckfreies Abrollen bzw. Abwälzen aufeinander und damit eine entsprechende Drehbewegung der Fördermittel zueinander bzw. eine entsprechende Kurvenfahrt des Fördermittelzuges ermöglicht werden.

Gemäß einem weiteren Aspekt der vorliegenden Erfindung weisen die Kopplungselemente bzw. deren Abstandshalter im Wesentlichen identische Konturen auf, welche spiegelverkehrt zueinander angeordnet sind und auf denen die Kopplungselemente bzw. deren Abstandshalter aufeinander abrollen können. Hierdurch können gleichmäßige Kurvenbewegungen ermöglicht werden.

Gemäß einem weiteren Aspekt der vorliegenden Erfindung weist das Kreuzbandgelenk ein erstes Seil und ein zweites Seil auf. Seile anstelle von Bändern zu verwenden hat den Vorteil, dass diese auch eine Bewegung der Fördermittel zueinander in der Höhe erlauben. Auf diese Weise können die Fördermittel bei einer derartigen Kopplung zueinander verkippen; Bänder würden dieser Bewegung durch ihre Ausdehnung in der Höhe entgegenwirken und durch derartige Belastungen beschädigt oder zerstört werden können.

Gemäß einem weiteren Aspekt der vorliegenden Erfindung weist jedes Fördermittel ein Räderpaar auf, welches in Richtung der Längsachse jeweils mittig zwischen zwei Kopplungspunkten bei Geradausfahrt angeordnet ist. Mit anderen Worten ist die Rollachse des Räderpaars bei Geradeausfahrt zum nächsten Kopplungspunkt mit dem nächsten vorderen Fördermittel sowie mit dem nächsten hinteren Fördermittel gleichweit beabstandet. Auch diese Weise kann eine spurtreue Bewegung der Fördermittel zueinander bei Geradeausfahrt verbessert werden.

Die vorliegende Erfindung betrifft auch ein Fördermittel für einen Fördermittelzug, insbesondere einen Routenzug, wie zuvor beschrieben. Diese ermöglicht eine Umsetzung des zuvor beschriebenen Fördermittelzuges mit den zuvor beschriebenen Eigenschaften und Vorteilen.

Die vorliegende Erfindung betrifft auch eine Kopplungskinematik für einen Fördermittelzug, insbesondere einen Routenzug, wie zuvor beschrieben. Diese ermöglicht eine Umsetzung des zuvor beschriebenen Fördermittelzuges mit den zuvor beschriebenen Eigenschaften und Vorteilen.

Ein Ausführungsbeispiel und weitere Vorteile der Erfindung werden nachstehend im Zusammenhang mit den folgenden Figuren erläutert. Darin zeigt:
- Fig. 1a: eine schematische Draufsicht auf zwei erfindungsgemäß gekoppelte Fördermittel in Geradeausfahrt;
- Fig. 1b: eine Detailansicht der Fig. 1a;
- Fig. 2a: eine Seitenansicht der Fig. 1a;
- Fig. 2b: eine Detailansicht der Fig. 2a;
- Fig. 3a: eine schematische Draufsicht auf zwei erfindungsgemäß gekoppelte Fördermittel in Kurvenfahrt mit einem geringen Drehwinkel zueinander;
- Fig. 3b: eine Detailansicht der Fig. 3a; und
- Fig. 4: eine schematische Draufsicht auf zwei erfindungsgemäß gekoppelte Fördermittel in Kurvenfahrt mit einem Drehwinkel über 90° zueinander.

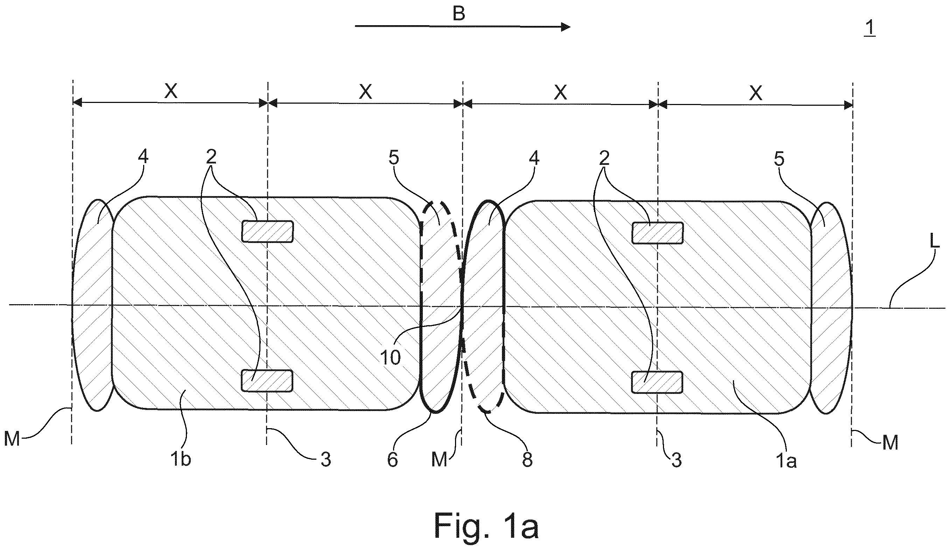

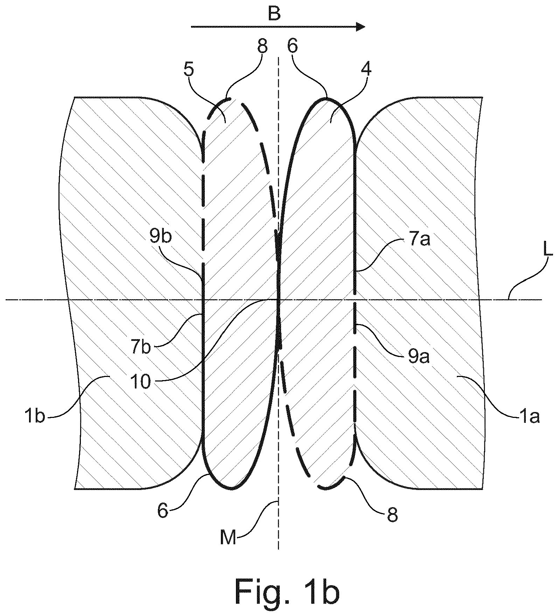

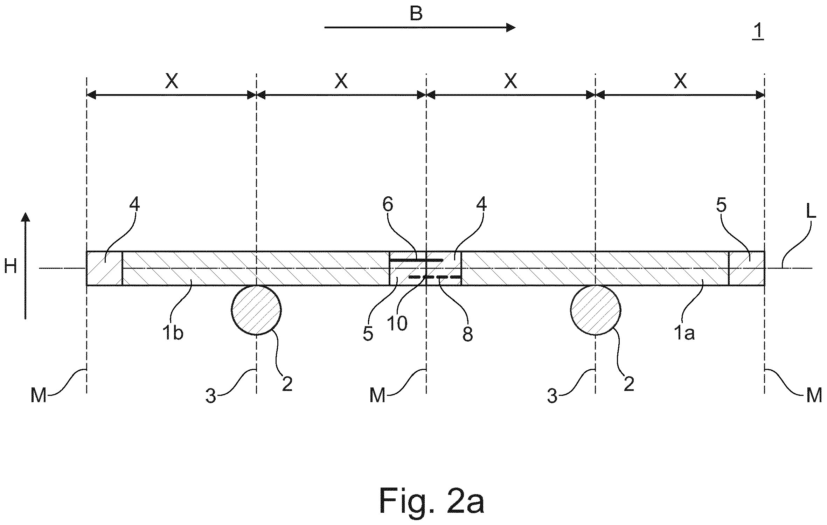

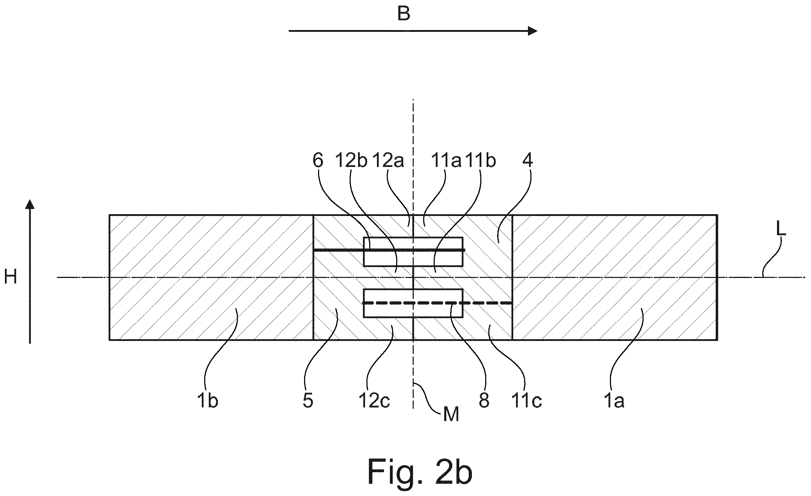

Fig. 1a zeigt eine schematische Draufsicht auf zwei erfindungsgemäß gekoppelte Fördermittel 1a, 1b in Geradeausfahrt. Fig. 1b zeigt eine Detailansicht der Fig. 1a. Fig. 2a zeigt eine Seitenansicht der Fig. 1a. Fig. 2b zeigt eine Detailansicht der Fig. 2a.

Ein Fördermittelzug 1 weist ein erstes Fördermittel 1a und ein zweites Fördermittel 1b auf, welche in einer Bewegungsrichtung B hintereinander angeordnet sind. Sie weisen hierdurch eine identische Längsachse L auf. Die beiden Fördermittel 1a, 1b weisen jeweils ein Räderpaar 2 auf. Die Räder 2 bilden die Rollachse 3 des jeweiligen Fördermittels 1a, 1b.

Die beiden Fördermittel 1a, 1b weisen jeweils in Bewegungsrichtung B am hinteren Ende ein erstes, hinteres bogenförmiges Kopplungselement 4 und gegenüberliegend am vorderen Ende ein zweites, vorderes bogenförmiges Kopplungselement 5 auf. Der Fördermittelzug 1 kann jedoch als Wendezug 1 ebenso in die entgegengesetzt Richtung der Bewegungsrichtung B bewegt werden. Die beiden Kopplungselemente 4, 5 weisen jeweils einen oberen Abstandhalter 11a, 12a, einen mittleren Abstandhalter 11b, 12b sowie einen unteren Abstandshalter 11c, 12c auf, welche sich jeweils in Richtung der Längsachse L berühren. In Richtung der Höhe H (vgl. Fig. 2a, 2b) sind die Abstandshalter 11a, 11b, 11c, 12a, 12b, 12c zueinander beabstandet.

In den jeweiligen Aussparungen zwischen den Abstandshaltern 11a, 11b, 11c, 12a, 12b, 12c verlaufen zwei Seile 6, 8 einander gegenläufig kreuzend. Die Seile 6, 8 sind aus Stahl und damit möglichst unelastisch, um Dehnungen bzw. Streckungen zu vermeiden. Die Seile 6, 8 sind mit ihren Enden jeweils zwischen dem Kopplungselement 4, 5 und dem Fördermittel 1a, 1b durch Befestigungen 7a, 7b, 9a, 9b angeordnet. Die Enden der Seile 6, 8 weisen hierzu Ösen auf, die in Haken der Befestigungen 7a, 7b, 9a, 9b eingehakt sind, die dann mittels eines Schraubmechanismus gespannt werden können, um ein Spiel zwischen den Fördermitteln 1a, 1b zu vermeiden bzw. zu minimieren.

Der Schnittpunkt 10 oder auch Kreuzungspunkt 10 der beiden Seile 6, 8 ist der Kopplungspunkt 10 der beiden Fördermittel 1a, 1b, der auch den Drehpunkt 10 bzw. Momentanpol 10 der beiden Fördermittel 1a, 1b zueinander darstellt. Die Fördermittel 1a, 1b bzw. deren Kopplungselemente 4, 5 und Rollachsen 3 sind derart ausgebildet bzw. angeordnet, dass die Rollachse 3 eines Fördermittels 1a, 1b zu dem Kopplungspunkt 10 bzw. dessen Achse M mit einem vorausfahrenden Fördermittel 1a, 1b sowie zu einem nacheilenden Fördermittel 1a, 1b den gleichen Abstand X bei Geradeausfahrt aufweist. Hierdurch kann ein spurtreues Fahrverhalten bei Geradeausfahrt unterstützt werden.

Erfindungsgemäß werden die beiden Fördermittel 1a, 1b durch ein Kreuzbandgelenk 4-12c miteinander verbunden, wobei in diesem Ausführungsbeispiel Seile 6, 8 anstelle von Bändern 6, 8 verwendet werden. Wie in der Fig. 1b im Detail in der Draufsicht schematisch dargestellt, ist hierzu ein erstes Seil 6 mit einem Ende über eine Befestigung 7a am ersten Fördermittel 1a befestigt. Das erste Seil 6 verläuft nun um die bogenförmige Kontur des ersten, hinteren Kopplungselements 4 des ersten Fördermittels 1a in der Aussparung zwischen dem oberen Abstandshalter 11a und dem mittleren Abstandshalter 11b (vgl. Fig. 2b) herum und wechselt am Kopplungspunkt 10 in die entsprechende Aussparung zwischen dem oberen Abstandshalter 12a und dem mittleren Abstandshalter 12b des zweiten, vorderen Kopplungssegments 5 des zweiten Fördermittels 1b. Das erste Seil 6 läuft nun auch um dieses herum, bis es über eine Befestigung 7b am zweiten Fördermittel 1b befestigt wird. Das zweite Seil 8 verläuft umgekehrt von einer ersten Befestigung 9a am ersten Fördermittel 1a um die bogenförmige Kontur des ersten, hinteren Kopplungselements 4 des ersten Fördermittels 1a in der Aussparung zwischen dem mittleren Abstandshalter 11b und dem unteren Abstandshalter 11c (vgl. Fig. 2b) herum und wechselt am Kopplungspunkt 10 in die entsprechende Aussparung zwischen dem mittleren Abstandshalter 12b und dem unteren Abstandshalter 12c des zweiten, vorderen Kopplungssegments 5 des zweiten Fördermittels 1b. Das zweite Seil 8 läuft nun auch um dieses herum, bis es über eine Befestigung 9b am zweiten Fördermittel 1b befestigt wird. Dabei kreuzen sich die beiden Seile 6, 8, von oben betrachtet, bei ihrem jeweiligen Wechsel zwischen den beiden Kopplungselementen 4, 5 gegenläufig am Schnittpunkt 10 bzw. Kreuzungspunkt 10.

Diese Anordnung ermöglicht eine Kopplung der beiden Fördermittel 1a, 1b mittels eines Kreuzbandgelenks 4-12c mit den entsprechenden Vorteilen. So sind die Bogenformen der Kopplungselemente 4, 5 derart ausgestaltet, dass diese aufeinander gleichmäßig bei Kurvenfahrten abrollen können. Gleichzeitig sind die Kopplungselemente 4, 5 in Richtung der Längsachse L möglichst kurz ausgebildet, um den Abstand zwischen den Fördermitteln 1a, 1b möglichst gering zu halten.

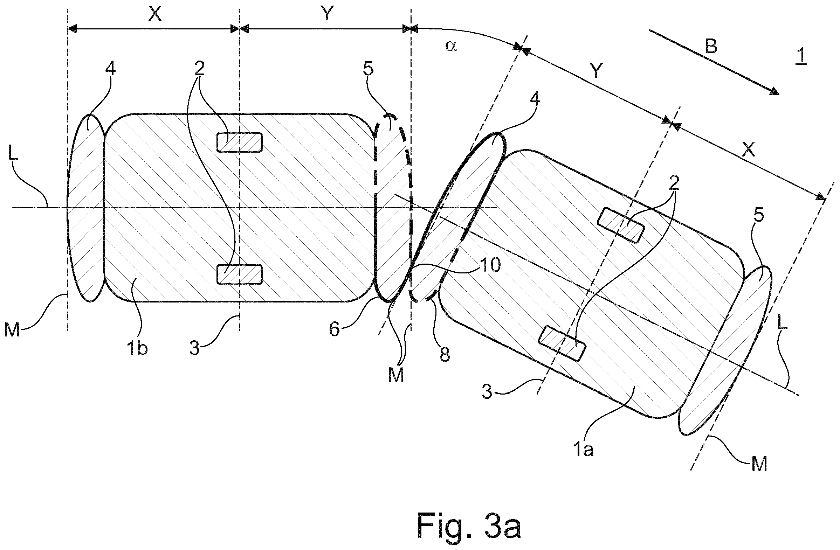

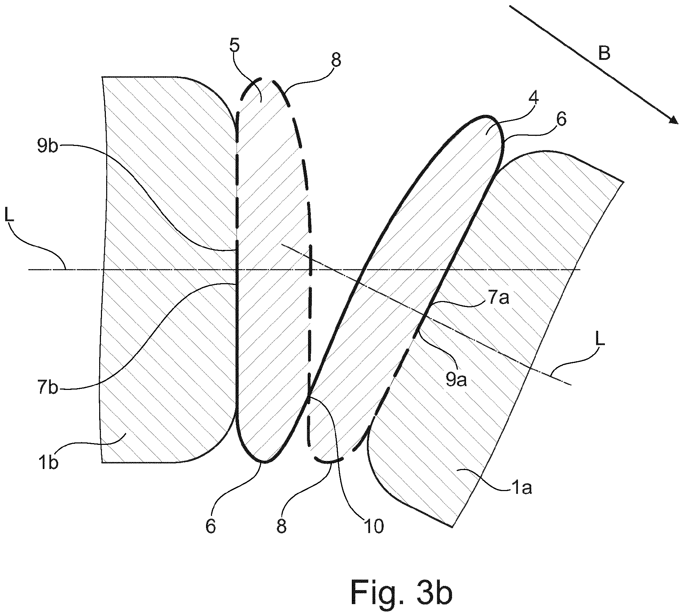

Fig. 3a zeigt eine schematische Draufsicht auf zwei erfindungsgemäß gekoppelte Fördermittel 1a, 1b in Kurvenfahrt mit einem geringen Drehwinkel α zueinander. Fig. 3b zeigt eine Detailansicht der Fig. 3a. In dieser Bewegung verschiebt sich der Kopplungspunkt 10 in die Kurve hinein, während die Kopplungselemente 4, 5 über ihre Abstandshalter 11a, 11b, 11c, 12a, 12b, 12c aufeinander abrollen. Hierbei verringert sich der Abstand zwischen dem Kopplungspunkt 10 bzw. seiner Achse M zu den beiden benachbarten Rollachsen 3 auf den Abstand Y, der jedoch in beide Richtungen weiterhin gleich bleibt.

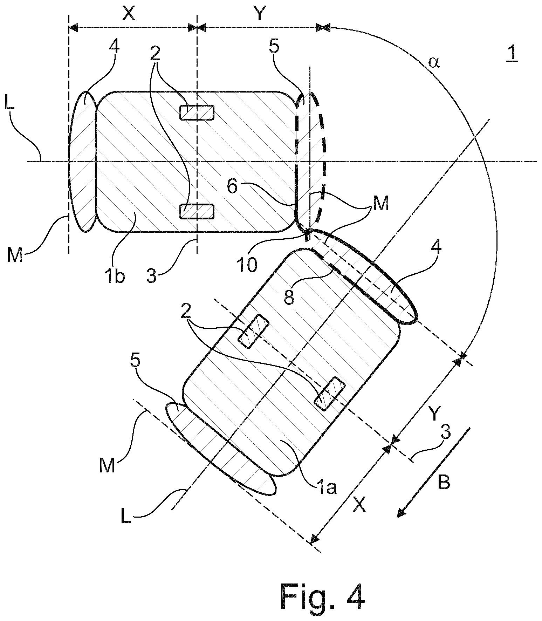

Fig. 4 zeigt eine schematische Draufsicht auf zwei erfindungsgemäß gekoppelte Fördermittel 1a, 1b in Kurvenfahrt mit einem Drehwinkel α über 90° zueinander. In dieser Bewegung hat sich der Kopplungspunkt 10 noch weiter in die Kurve hinein verschoben und der Abstand Y sich noch weiter verkürzt. Die Fördermittel 1a, 1b bleiben jedoch auch in dieser Bewegung kontrollierbar miteinander verbunden und durch ein Zugfahrzeug (nicht dargestellt) beweglich.

### BEZUGSZEICHENLISTE (Teil der Beschreibung)

- α: Drehwinkel der Fördermittels 1a, 1b zueinander bei Kurvenfahrt
- B: Bewegungsrichtung, Fahrtrichtung eines Fördermittels 1a, 1b bzw. des Fördermittelzugs 1
- H: Höhe eines Fördermittels 1a, 1b
- L: (Mittel-)Längsachse eines Fördermittels 1a, 1b
- M: Achse des Kopplungspunkts 10, des Momentanpols 10 zweier Fördermittel 1a, 1b
- X: Abstand zwischen einer Rollachse 3 und einem Kopplungspunkt 10 bei Geradeausfahrt
- Y: Abstand zwischen einer Rollachse 3 und einem Kopplungspunkt 10 bei Kurvenfahrt

- 1: Fördermittelzug
- 1a: erstes Fördermittel, erster Routenzuganhänger
- 1b: zweites Fördermittel, zweiter Routenzuganhänger
- 2: Räderpaar eines Fördermittels 1a, 1b
- 3: Rollachse, Radachse eines Fördermittels 1a, 1b
- 4: erstes/hinteres (bogenförmiges) Kopplungssegment eines Fördermittels 1a, 1b
- 5: zweites/vorderes (bogenförmiges) Kopplungssegment eines Fördermittels 1a, 1b
- 6: erstes Band/Seil eines Fördermittels 1a, 1b
- 7a, 7b: Befestigung des ersten Bands/Seils 6 am ersten bzw. zweiten Fördermittel 1a, 1b
- 8: zweites Band/Seil eines Fördermittels 1a, 1b
- 9a, 9b: Befestigung des zweiten Bands/Seils 8 am ersten bzw. zweiten Fördermittel 1a, 1b
- 10: Kopplungspunkt, Drehpunkt, Momentanpol zweier Fördermittel 1a, 1b; Schnittpunkt, Kreuzungspunkt der beiden Bänder 6, 8 bzw. Seile 6, 8
- 11a: oberer Abstandshalter des ersten/hinteren (bogenförmigen) Kopplungssegments 4
- 11b: mittlerer Abstandshalter des ersten/hinteren (bogenförmigen) Kopplungssegments 4
- 11c: unterer Abstandshalter des ersten/hinteren (bogenförmigen) Kopplungssegments 4
- 12a: oberer Abstandshalter des zweiten/vorderen (bogenförmigen) Kopplungssegments 5
- 12b: mittlerer Abstandshalter des zweiten/vorderen (bogenförmigen) Kopplungssegments 5
- 12c: unterer Abstandshalter des zweiten/vorderen (bogenförmigen) Kopplungssegments 5

## Patentansprüche

1. Fördermittelzug (1), insbesondere Routenzug (1a, 1b), mit
einem ersten Fördermittel (1a), und
einem zweiten Fördermittel (1b),
welche mittels einer Kopplungskinematik (4-12c) um einen Kopplungspunkt (10) drehbar miteinander verbunden werden können,
wobei die Kopplungskinematik (4-12c) ein erstes Band (6) oder Seil (6) und ein zweites Band (8) oder Seil (8) aufweist,
wobei die Bänder (6, 8) oder Seile (6, 8) jeweils am ersten und zweiten Fördermittel (1a, 1b) sich gegenläufig kreuzend befestigt werden können,
**dadurch gekennzeichnet, dass**
die Kopplungskinematik (4-12c) als Kreuzbandgelenk (4-12c) ausgebildet ist, welches ein erstes Kopplungssegment (4), welches am ersten Fördermittel (1a) angeordnet ist, und ein zweites Kopplungssegment (5) aufweist, welches am zweiten Fördermittel (1b) dem ersten Kopplungssegment (4) zugewandt angeordnet ist,
wobei die Bänder (6, 8) oder Seile (6, 8) jeweils am ersten und zweiten Fördermittel (1a, 1b) derart befestigt werden können und derart, sich gegenläufig kreuzend, über die Kopplungselemente (4, 5) verlaufen können, so dass die Kopplungselemente (4, 5) aufeinander abrollen können.

2. Fördermittelzug (1) nach Anspruch 1,
wobei der Schnittpunkt der Bänder (6, 8) oder Seile (6, 8) den Kopplungspunkt (10) der beiden Fördermittel (1a, 1b) bildet.

3. Fördermittelzug (1) nach einem der Ansprüche 1 oder 2,
wobei die Bänder (6; 8) oder Seile (6; 8) jeweils an den Kopplungselementen (4; 5) und/oder an den Fördermitteln (1a; 1b) durch Befestigungen (7a, 7b, 9a, 9b) aufgenommen werden können.

4. Fördermittelzug (1) nach Anspruch 3,
wobei die Befestigungen (7a, 7b, 9a, 9b) ausgebildet sind, die Bänder (6; 8) oder Seile (6; 8) zu spannen.

5. Fördermittelzug (1) nach einem der vorherigen Ansprüche,
wobei die Bänder (6; 8) oder Seile (6; 8) in der Höhe (H) versetzt zueinander verlaufend angeordnet werden können.

6. Fördermittelzug (1) nach einem der vorherigen Ansprüche,
wobei die Kopplungselemente (4, 5) jeweils wenigstens einen Abstandshalter (11a, 11b, 11c, 12a, 12b, 12c) aufweisen, welche sich in Richtung der Längsachse (L) derart über die Bänder (6; 8) oder Seile (6; 8) hinauserstrecken, so dass die Kopplungselemente (4, 5) über die Abstandshalter (11a, 11b, 11c, 12a, 12b, 12c) aufeinander abrollen können.

7. Fördermittelzug (1) nach Anspruch 6,
wobei die Kopplungselemente (4, 5) jeweils einen oberen Abstandshalter (11a, 12a) und einen unteren Abstandshalter (11c, 12c), vorzugsweise ferner einen mittleren Abstandshalter (11b, 12b), aufweisen, welche in der Höhe (H) zueinander versetzt angeordnet sind.

8. Fördermittelzug (1) nach Anspruch 7,
wobei das erste Band (6) oder Seil (6) zwischen den oberen Abstandshaltern (11a, 12a) und den mittleren Abstandshaltern (11b, 12b) und das zweite Band (8) oder Seil (8) zwischen den mittleren Abstandhaltern (11b, 12b) und den unteren Abstandshaltern (11c, 12c) verlaufen kann.

9. Fördermittelzug (1) nach einem der vorherigen Ansprüche,
wobei wenigstens ein Kopplungselement (4, 5), vorzugsweise beide Kopplungselemente (4, 5), bzw. deren Abstandshalter (11a, 11b, 11c, 12a, 12b, 12c) wenigstens in Richtung der Längsachse (L) federnd ausgebildet sind.

10. Fördermittelzug (1) nach einem der vorherigen Ansprüche,
wobei die Kopplungselemente (4, 5) bzw. deren Abstandshalter (11a, 11b, 11c, 12a, 12b, 12c) jeweils bogenförmige, elliptische oder halbkreisförmige Konturen aufweisen, die aufeinander abrollen können.

11. Fördermittelzug (1) nach einem der vorherigen Ansprüche,
wobei die Kopplungselemente (4, 5) bzw. deren Abstandshalter (11a, 11b, 11c, 12a, 12b, 12c) im Wesentlichen identische Konturen aufweisen, welche spiegelverkehrt zueinander angeordnet sind und auf denen die Kopplungselemente (4, 5) bzw. deren Abstandshalter (11a, 11b, 11c, 12a, 12b, 12c) aufeinander abrollen können.

12. Fördermittelzug (1) nach einem der vorherigen Ansprüche,
wobei das Kreuzbandgelenk (4-9) ein erstes Seil (6) und ein zweites Seil (8) aufweist.

13. Fördermittelzug (1) nach einem der vorherigen Ansprüche,
wobei jedes Fördermittel (1a; 1b) ein Räderpaar (2) aufweist, welches in Richtung der Längsachse (L) jeweils mittig zwischen zwei Kopplungspunkten (10) bei Geradausfahrt angeordnet ist.

14. Erstes Fördermittel (1a) für einen Fördermittelzug (1), insbesondere einen Routenzug (1a), nach einem der vorherigen Ansprüche,
mit einem ersten Kopplungssegment (4) einer Kopplungskinematik (4-12c), welches am ersten Fördermittel (1a) angeordnet ist,
wobei die Kopplungskinematik (4-12c) ausgebildet ist, das erste Fördermittel (1a) mit einem zweiten Fördermittel (1b) des Fördermittelzugs (1) um einen Kopplungspunkt (10) drehbar miteinander zu verbinden,
wobei die Kopplungskinematik (4-12c) ein erstes Band (6) oder Seil (6) und ein zweites Band (8) oder Seil (8) aufweist,
wobei die Bänder (6, 8) oder Seile (6, 8) ausgebildet sind, jeweils am ersten und zweiten Fördermittel (1a, 1b) sich gegenläufig kreuzend befestigt zu werden,
**dadurch gekennzeichnet, dass**
die Kopplungskinematik (4-12c) als Kreuzbandgelenk (4-12c) ausgebildet ist,
wobei die Kopplungskinematik (4-12c) ein zweites Kopplungssegment (5) aufweist, welches am zweiten Fördermittel (1b) dem ersten Kopplungssegment (4) zugewandt angeordnet ist,
wobei die Bänder (6, 8) oder Seile (6, 8) ausgebildet sind, jeweils am ersten und zweiten Fördermittel (1a, 1b) derart befestigt zu werden und derart, sich gegenläufig kreuzend, über die Kopplungselemente (4, 5) zu verlaufen, so dass die Kopplungselemente (4, 5) aufeinander abrollen können.

15. Kopplungskinematik (4-12c) für einen Fördermittelzug (1), insbesondere einen Routenzug (1a, 1b), nach einem der Ansprüche 1 bis 13 oder für ein erstes Fördermittel (1a) nach Anspruch 14,
wobei die Kopplungskinematik (4-12c) ausgebildet ist, ein erstes Fördermittel (1a) und ein zweites Fördermittel (1b) um einen Kopplungspunkt (10) drehbar miteinander zu verbinden,
wobei die Kopplungskinematik (4-12c) ein erstes Band (6) oder Seil (6) und ein zweites Band (8) oder Seil (8) aufweist,
wobei die Bänder (6, 8) oder Seile (6, 8) ausgebildet sind, jeweils am ersten und zweiten Fördermittel (1a, 1b) sich gegenläufig kreuzend befestigt zu werden,
**dadurch gekennzeichnet, dass**
die Kopplungskinematik (4-12c) als Kreuzbandgelenk (4-12c) ausgebildet ist, welches ein erstes Kopplungssegment (4), welches ausgebildet ist, am ersten Fördermittel (1a) zu angeordnet werden, und ein zweites Kopplungssegment (5) aufweist, welches ausgebildet ist, am zweiten Fördermittel (1b) dem ersten Kopplungssegment (4) zugewandt angeordnet zu werden,
wobei die Bänder (6, 8) oder Seile (6, 8) ausgebildet sind, jeweils am ersten und zweiten Fördermittel (1a, 1b) derart befestigt zu werden und derart, sich gegenläufig kreuzend, über die Kopplungselemente (4, 5) zu verlaufen, so dass die Kopplungselemente (4, 5) aufeinander abrollen können.

## Claims

1. Conveyor train (1), in particular a tugger train (1a, 1b), comprising a first conveying means (1a), and a second conveying means (1b), which, by means of coupling kinematics (4-12c), can be interconnected so as to be rotatable about a coupling point (10), the coupling kinematics (4-12c) having a first belt (6) or cable (6) and a second belt (8) or cable (8), it being possible to fasten each of the belts (6, 8) or cables (6, 8) to the first and second conveying means (1a, 1b) so as to cross one another in opposite directions, **characterized in that** the coupling kinematics (4-12c) are designed as a crossed belt joint (4-12c) which has a first coupling segment (4) which is arranged on the first conveying means (1a), and a second coupling segment (5) which is arranged on the second conveying means (1b) so as to face the first coupling segment (4), it being possible to fasten each of the belts (6, 8) or cables (6, 8) to the first and second conveying means (1a, 1b) and for said belts and cables to extend over the coupling elements (4, 5) so as to cross one another in opposite directions such that the coupling elements (4, 5) can roll on one another.

2. Conveyor train (1) according to claim 1, wherein the point of intersection of the belts (6, 8) or cables (6, 8) forms the coupling point (10) of the two conveying means (1a, 1b).

3. Conveyor train (1) according to either claim 1 or claim 2, wherein the belts (6; 8) or cables (6; 8) can each be received on the coupling elements (4; 5) and/or on the conveying means (1a; 1b) by means of fastenings (7a, 7b, 9a, 9b).

4. Conveyor train (1) according to claim 3, wherein the fastenings (7a, 7b, 9a, 9b) are designed to tension the belts (6; 8) or cables (6; 8).

5. Conveyor train (1) according to any of the preceding claims, wherein the belts (6; 8) or cables (6; 8) can be arranged so as to extend offset to one another in terms of height (H).

6. Conveyor train (1) according to any of the preceding claims, wherein the coupling elements (4, 5) each comprise at least one spacer (11a, 11b, 11c, 12a, 12b, 12c) which extend in the direction of the longitudinal axis (L) beyond the belts (6; 8) or cables (6; 8) such that the coupling elements (4, 5) can roll on one another via the spacers (11a, 11b, 11c, 12a, 12b, 12c).

7. Conveyor train (1) according to claim 6, wherein the coupling elements (4, 5) each have an upper spacer (11a, 12a) and a lower spacer (11c, 12c), preferably also a middle spacer (11b, 12b), which are arranged offset to one another in terms of height (H).

8. Conveyor train (1) according to claim 7, wherein the first belt (6) or cable (6) can extend between the upper spacers (11a, 12a) and the middle spacers (11b, 12b), and the second belt (8) or cable (8) can extend between the middle spacers (11b, 12b) and the lower spacers (11c, 12c).

9. Conveyor train (1) according to any of the preceding claims, wherein at least one coupling element (4, 5), preferably the two coupling elements (4, 5), or the spacers (11a, 11b, 11c, 12a, 12b, 12c) of said elements are resilient at least in the direction of the longitudinal axis (L).

10. Conveyor train (1) according to any of the preceding claims, wherein the coupling elements (4, 5) or the spacers (11a, 11b, 11c, 12a, 12b, 12c) of said elements each have arcuate, elliptical or semicircular contours that can roll on one another.

11. Conveyor train (1) according to any of the preceding claims, wherein the coupling elements (4, 5) or the spacers (11a, 11b, 11c, 12a, 12b, 12c) of said elements have substantially identical contours which are arranged so as to be mirror-inverted relative to one another, on which the coupling elements (4, 5) or the spacers (11a, 11b, 11c, 12a, 12b, 12c) of said elements can roll on one another.

12. Conveyor train (1) according to any of the preceding claims, wherein the crossed belt joint (4-9) has a first cable (6) and a second cable (8).

13. Conveyor train (1) according to any of the preceding claims, wherein each conveying means (1a, 1b) has a pair of wheels (2) which is in each case arranged centrally between two coupling points (10) in the direction of the longitudinal axis (L) when traveling in a straight line.

14. First conveying means (1a) for a conveyor train (1), in particular a tugger train (1a), according to any of the preceding claims, comprising a first coupling segment (4) of coupling kinematics (4-12c) that is arranged on the first conveying means (1a), the coupling kinematics (4-12c) being designed to interconnect the first conveying means (1a) to a second conveying means (1b) of the conveyor train (1) so as to be rotatable about a coupling point (10), the coupling kinematics (4-12c) having a first belt (6) or cable (6) and a second belt (8) or cable (8), the belts (6, 8) or cables (6, 8) being designed to each be fastened to the first and second conveying means (1a, 1b) so as to cross one another in opposite directions, **characterized in that** the coupling kinematics (4-12c) are designed as a crossed belt joint (4-12c), the coupling kinematics (4-12c) having a second coupling segment (5) which is arranged on the second conveying means (1b) so as to face the first coupling segment (4), the belts (6, 8) or cables (6, 8) being designed to each be fastened to the first and second conveying means (1a, 1b) and to extend over the coupling elements (4, 5) so as to cross one another in opposite directions such that the coupling elements (4, 5) can roll on one another.

15. Coupling kinematics (4-12c) for a conveyor train (1), in particular a tugger train (1a, 1b), according to any of claims 1 to 13, or for a first conveying means (1a) according to claim 14, the coupling kinematics (4-12c) being designed to interconnect a first conveying means (1a) and a second conveying means (1b) so as to be rotatable about a coupling point (10), the coupling kinematics (4-12c) having a first belt (6) or cable (6) and a second belt (8) or cable (8), the belts (6, 8) or cables (6, 8) being designed to each be fastened to the first and second conveying means (1a, 1b) so as to cross one another in opposite directions, **characterized in that** the coupling kinematics (4-12c) are designed as a crossed belt joint (4-12c) which has a first coupling segment (4) which is designed to be arranged on the first conveying means (1a), and a second coupling segment (5) which is designed to be arranged on the second conveying means (1b) so as to face the first coupling segment (4), the belts (6, 8) or cables (6, 8) being designed to each be fastened to the first and second conveying means (1a, 1b) and to extend over the coupling elements (4, 5) so as to cross one another in opposite directions such that the coupling elements (4, 5) can roll on one another.

## Revendications

1. Traction de moyen de transport (1), en particulier chariot (1a, 1b), avec un premier moyen de transport (1a) et un second moyen de transport (1b), lesquels peuvent être reliés entre eux de manière rotative au moyen d'une cinématique de couplage (4-12c) autour d'un point de couplage (10), la cinématique de couplage (4-12c) présentant une première bande (6) ou un premier câble (6) et une seconde bande (8) ou un second câble (8), les bandes (6, 8) ou les câbles (6, 8) pouvant être fixés par croisement dans des directions opposées sur les premier et second moyens de transport (1a, 1b) respectivement, **caractérisée en ce que** la cinématique de couplage (4-12c) est conçue comme une articulation à bande croisée (4-12c) présentant un premier segment de couplage (4) disposé sur le premier moyen de transport (1a) et un second segment de couplage (5) disposé sur le second moyen de transport (1b) de manière orientée vers le premier segment de couplage (4), les bandes (6, 8) ou les câbles (6, 8) pouvant être fixés respectivement sur les premier et second moyens de transport (1a, 1b) et pouvant s'étendre par croisement dans des directions opposées sur les éléments de couplage (4, 5) de sorte que les éléments de couplage (4, 5) puissent se chevaucher.

2. Traction de moyen de transport (1) selon la revendication 1, dans laquelle le point d'intersection des bandes (6, 8) ou des câbles (6, 8) forme le point de couplage (10) des deux moyens de transport (1a, 1b).

3. Traction de moyen de transport (1) selon l'une quelconque des revendications 1 ou 2, dans laquelle les bandes (6, 8) ou les câbles (6, 8) peuvent être reçus respectivement sur les éléments de couplage (4, 5) et/ou sur les moyens de transport (1a, 1b) au moyen de fixations (7a, 7b, 9a, 9b).

4. Traction de moyen de transport (1) selon la revendication 3, dans laquelle les fixations (7a, 7b, 9a, 9b) sont conçues pour tendre les bandes (6, 8) ou les câbles (6, 8).

5. Traction de moyen de transport (1) selon l'une des revendications précédentes, dans laquelle les bandes (6, 8) ou les câbles (6, 8) peuvent être disposés de façon à s'étendre de manière décalée en hauteur (H) les un(e)s par rapport aux autres.

6. Traction de moyen de transport (1) selon l'une des revendications précédentes, dans laquelle les éléments de couplage (4, 5) présentent chacun au moins une entretoise (11a, 11b, 11c, 12a, 12b, 12c, 12c) qui s'étend dans la direction de l'axe longitudinal (L) au-delà des bandes (6, 8) ou des câbles (6, 8) de sorte que les éléments de couplage (4, 5) puissent se chevaucher sur les entretoises (11a, 11b, 11c, 12a, 12b, 12c).

7. Traction de moyen de transport (1) selon la revendication 6, dans laquelle les éléments de couplage (4, 5) présentent chacun une entretoise supérieure (11a, 12a) et une entretoise inférieure (11c, 12c), de préférence en outre une entretoise centrale (11b, 12b), lesquelles sont disposées de manière décalée en hauteur (H) les unes par rapport aux autres.

8. Traction de moyen de transport (1) selon la revendication 7, dans laquelle la première bande (6) ou le premier câble (6) peut s'étendre entre les entretoises supérieures (11a, 12a) et les entretoises centrales (11b, 12b) et la seconde bande (8) ou le second câble (8) peut s'étendre entre les entretoises centrales (11b, 12b) et les entretoises inférieures (11c, 12c).

9. Traction de moyen de transport (1) selon l'une des revendications précédentes, dans laquelle au moins un élément de couplage (4, 5), de préférence les deux éléments de couplage (4, 5), ou leurs entretoises (11a, 11b, 11c, 12a, 12b, 12c) sont conçus de manière élastique au moins dans la direction de l'axe longitudinal (L).

10. Traction de moyen de transport (1) selon l'une des revendications précédentes, dans laquelle les éléments de couplage (4, 5) ou leurs entretoises (11a, 11b, 11c, 12a, 12b, 12c) présentent chacun(e) des contours arqués, elliptiques ou semi-circulaires qui peuvent se chevaucher.

11. Traction de moyen de transport (1) selon l'une des revendications précédentes, dans laquelle les éléments de couplage (4, 5) ou leurs entretoises (11a, 11b, 11c, 12a, 12b, 12c) présentent des contours sensiblement identiques disposés en miroir inversé les uns par rapport aux autres et sur lesquels les éléments de couplage (4, 5) ou leurs entretoises (11a, 11b, 11c, 12a, 12b, 12c) peuvent se chevaucher.

12. Traction de moyen de transport (1) selon l'une des revendications précédentes, dans laquelle l'articulation à bande croisée (4-9) présente un premier câble (6) et un second câble (8).

13. Traction de moyen de transport (1) selon l'une des revendications précédentes, dans laquelle chaque moyen de transport (1a, 1b) présente une paire de roues (2) qui, dans la direction de l'axe longitudinal (L), est disposée à chaque fois au centre entre deux points de couplage (10) en ligne droite.

14. Premier moyen de transport (1a) pour une traction de moyen de transport (1), en particulier un chariot (1a), selon l'une des revendications précédentes, comportant un premier segment de couplage (4) d'une cinématique de couplage (4-12c), lequel est disposé sur le premier moyen de transport (1a), la cinématique de couplage (4-12c) étant conçue pour relier de manière rotative le premier moyen de transport (1a) à un second moyen de transport (1b) de la traction de moyen de transport (1) autour d'un point de couplage (10), la cinématique de couplage (4-12c) présentant une première bande (6) ou un premier câble (6) et une seconde bande (8) ou un second câble (8), les bandes (6, 8) ou les câbles (6, 8) étant conçus pour être fixés par croisement dans des directions opposées respectivement sur les premier et second moyens de transport (1a, 1b), **caractérisé en ce que** la cinématique de couplage (4-12c) est conçue comme une articulation à bande croisée (4-12c), la cinématique de couplage (4-12c) présentant un second segment de couplage (5) disposé sur le second moyen de transport (1b) de manière orientée vers le premier segment de couplage (4), les bandes (6, 8) ou les câbles (6, 8) étant conçus pour être fixés respectivement sur les premier et second moyens de transport (1a, 1b) et pour s'étendre par croisement dans des directions opposées sur les éléments de couplage (4, 5), de sorte que les éléments de couplage (4, 5) puissent se chevaucher.

15. Cinématique de couplage (4-12c) pour une traction de moyen de transport (1), en particulier un chariot (1a, 1b), selon l'une des revendications 1 à 13 ou pour un premier moyen de transport (1a) selon la revendication 14, la cinématique de couplage (4-12c) étant conçue pour relier entre eux de manière rotative un premier moyen de transport (1a) et un second moyen de transport (1b) autour d'un point de couplage (10), la cinématique de couplage (4-12c) présentant une première bande (6) ou un premier câble (6) et une seconde bande (8) ou un second câble (8), les bandes (6, 8) ou les câbles (6, 8) étant conçus pour être fixés par croisement dans des directions opposées sur les premier et second moyens de transport (1a, 1b) respectivement, **caractérisée en ce que** la cinématique de couplage (4-12c) est conçue comme une articulation à bande croisée (4-12c) présentant un premier segment de couplage (4) conçu pour être disposé sur le premier moyen de transport (1a) et un second segment de couplage (5) conçu pour être disposé sur le second moyen de transport (1b) de manière orientée vers le premier segment de couplage (4), les bandes (6, 8) ou les câbles (6, 8) étant conçus pour être fixés respectivement sur les premier et second moyens de transport (1a, 1b) et pour s'étendre par croisement dans des directions opposées sur les éléments de couplage (4, 5), de sorte que les éléments de couplage (4, 5) puissent se chevaucher.
